# EUROPÄISCHE PATENTANMELDUNG

(11) **EP 3 001 348 A1**
(43) Veröffentlichungstag der Anmeldung: **30.03.2016**
(21) Anmeldenummer: 14186066.8
(22) Anmeldetag: 24.09.2014
(51) Int. Cl.: G06K 7/10, G05B 23/02, G06K 19/06, H04L 12/26, H04N 1/00, G06F 17/30, H04M 1/2755, H04L 29/08, G05B 19/406

(54) **Unterstützung von Bedienern eines technischen Gerätes**

(71) Anmelder: Siemens Aktiengesellschaft, 80333 München (DE)
(72) Erfinder: Müller, Klaus-Jürgen, 09111 Chemnitz (DE)

(57) **Zusammenfassung**

Um dem Bediener eines technischen Gerätes (1) Meldungen, die das Gerät als alphanumerischer Code anzeigt, besser verständlich zu machen, wird eine Lösung vorgeschlagen, bei der dieser Code durch eine Umwandlungseinrichtung des Gerätes in einen Mustercode umgewandelt wird, den dann ein Bediener mit seinem Smartphone (6) fotografiert und über eine App an einen Serviceanbieter des Gerätes sendet, worauf der Bediener eine Klartext-Antwort zur Erläuterung des alphanumerischen Codes erhält.

## Beschreibung

Die Erfindung betrifft ein technisches Gerät, eine App für ein Smartphone sowie ein Verfahren zum Ermitteln einer Antwort auf eine Anfrage und ein Verfahren zur Unterstützung von Bedienern eines technischen Gerätes.

Derartige Vorrichtungen sowie derartige Verfahren kommen insbesondere bei komplexeren Geräten zum Einsatz, deren Warnungs-, Alarm- und Fehlermeldungen oft unverständlich sind. Viele technische Geräte - wie z.B. auch SPS (speicherprogrammierbare Steuerungen) und CNC (computerized numerical control) - verfügen über Bildschirme zur Mensch-Maschine-Kommunikation (HMI, "Human Machine Interface"), auf denen u.a. auch Diagnosen (Warnungen, Fehler, Alarme) angezeigt werden. Dies geschieht meist in Form mehrerer Zahlen (z.B. "Alarm 27299 107 2 0 0" bei der SINUMERIK 840D), also in einem alphanumerischen Code.

Dem Anwender/Bediener obliegt es dann, dies in eine für ihn verständliche Form zu bringen, beispielsweise durch Nachschlagen in einem Diagnosehandbuch oder durch Aufrufen einer Online-Hilfe. Dabei befindet sich ein Diagnosehandbuch nicht immer gleich am Ort der Handlung und ist auch nicht immer auf dem neuesten Stand (z.B. nach einem Software-Update); mithin ist diese Lösung langsam. Schneller ginge ein direkter Aufruf einer Online-Hilfe; eine solche hingegen ist nur selten und auch nur in manchen Geräten implementiert.

Der Erfindung liegt die Aufgabe zugrunde, einen Bediener eines technischen Gerätes besser beim Verstehen von Meldungen in einem alphanumerischen Code zu unterstützen.

Die Aufgabe wird gelöst durch ein technisches Gerät mit zumindest einem Bildschirm, mittels dem ein Mustercode ausgebbar ist, und zumindest einer Umwandlungseinrichtung, mittels der eine Ausgabe des Gerätes von einem alphanumerischen Code in den Mustercode umwandelbar ist, wobei der Mustercode zumindest die im alphanumerischen Code enthaltenen Informationen aufweist.

Die Aufgabe wird weiter gelöst durch eine App für ein Smartphone, wobei ein vom Smartphone aufgenommener Mustercode eines derartigen technischen Gerätes an einen Serviceanbieter des Gerätes sendbar ist.

Die Aufgabe wird weiter gelöst durch ein Verfahren zum Ermitteln einer Antwort auf eine Anfrage, wobei
- als Anfrage ein Mustercode eines derartigen technisches Gerätes mittels einer Empfangseinheit empfangen wird,
- anhand des Mustercodes die Art des technischen Gerätes sowie der in den Mustercode umgewandelte alphanumerische Code ermittelt werden,
- anhand des alphanumerischen Codes in einer Datenbank eine Erläuterung zum alphanumerischen Code ermittelt wird und
- die Erläuterung als Antwort zurückgesendet wird.

Die Aufgabe wird schließlich gelöst durch ein Verfahren zur Unterstützung von Bedienern eines derartigen technischen Gerätes, wobei
- von dem Gerät ein alphanumerischer Code ausgegeben wird,
- der alphanumerische Code durch eine Umwandlungseinrichtung in einen Mustercode umgewandelt wird,
- der Mustercode vom Bediener mittels eines Smartphones aufgenommen und über eine App an einen Serviceanbieter des Gerätes gesendet wird und
- eine Erläuterung des Serviceanbieters zum alphanumerischen Code auf dem Smartphone empfangen und dargestellt wird.

Durch die erfindungsgemäße Lösung kann die Diagnose/Meldung, die in einem alphanumerischen Code ausgegeben wird, als Mustercode - beispielsweise Strichcode - ausgegeben werden. Dabei kann vorgesehen sein, dass der Mustercode automatisch angezeigt wird, vorzugsweise im zeitlichen Wechsel mit dem alphanumerischen Code, wobei jeder Code für einige Sekunden angezeigt wird. Möglich ist natürlich auch eine Anzeige, bei der gleichzeitig mit dem alphanumerischen Code der umgewandelt Mustercode dargestellt wird. Diesen fotografiert der Anwender/Bediener mit seinem Smartphone und sendet ihn über eine App an einen Serviceanbieter, von dem er eine zugehörige Klartext-Diagnose z.B. per SMS oder E-Mail empfängt.

Der Serviceanbieter, der natürlich mit dem Gerätehersteller identisch sein kann, ermittelt den zu einem Code gehörigen Klartext beispielsweise anhand einer Datenbank und wendet so neueste, allgemein verfügbare Technik (Smartphone) als Service zur schnelleren und komfortableren Unterstützung der Kunden (Bediener/Anwender) an.

In einer vorteilhaften Form der Ausgestaltung weist das technische Gerät zumindest eine Eingabeeinheit auf, mittels der die Umwandlung auslösbar ist. Hierdurch wird die Umwandlung erst gestartet, wenn der Bediener diese Hilfefunktion auch in Anspruch nehmen möchte.

In einer weiteren vorteilhaften Ausführungsform ist dabei die Eingabeeinheit des technischen Gerätes in den Bildschirm integriert. Durch die Verwendung von Touchscreens ist oft eine besonders intuitive Benutzerführung möglich, da leicht zusätzliche Hinweise an den Bediener gegeben werden können.

In einer weiteren vorteilhaften Ausführungsform ist der Mustercode als zumindest zweidimensionaler Code ausgeführt. Durch die Verwendung höher-dimensionaler Codes lassen sich natürlich mehr Informationen codieren, wobei beispielsweise bei einem dreidimensionalen Code noch eine Farbskala zur Kodierung genutzt wird und ein vierdimensionaler Code eine (kurze) Animation enthält - wobei im letzteren Fall anstelle eines Fotos natürlich eine kurze Videosequenz mit dem Smartphone aufgenommen werden muss.

In einer weiteren vorteilhaften Ausführungsform ist der Serviceanbieter anhand des Mustercodes von der App ermittelbar. Hierdurch erkennt die App beispielsweise bei verschiedenen Geräten von verschiedenen Herstellern den richtigen zugehörigen Serviceanbieter automatisch.

In einer weiteren vorteilhaften Ausführungsform ist eine Antwort des Serviceanbieters von der App grafisch darstellbar. Hierdurch muss sich die "Klartext-Antwort" nicht auf Text beschränken, sondern kann auch grafische Hinweise an den Bediener beispielsweise zur Behebung eines Fehlers enthalten.

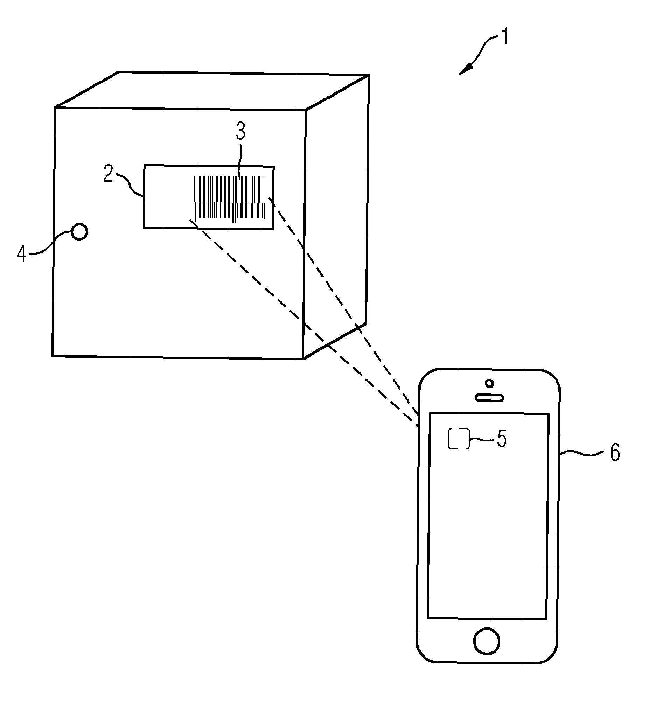

Im Folgenden wird die Erfindung anhand des in der Figur dargestellten Ausführungsbeispiels näher beschrieben und erläutert. Die Figur zeigt:
eine schematische Darstellung der erfindungsgemäßen Lösung.

Die Figur zeigt eine schematische Darstellung eines technischen Geräts 1 mit einem Bildschirm 2, auf dem Meldungen/Diagnosen des Gerätes 1 ausgegeben werden können. Dabei werden Alarm-, Fehler- und Warnmeldungen oft in einem für einen menschlichen Bediener unverständlichen alphanumerischen Code ausgegeben. Beispielsweise durch Betätigen einer Taste (Eingabeeinheit) 4 kann dann der Bediener diesen alphanumerischen Code in einen Mustercode - beispielsweise in einen eindimensionalen Strichcode - umwandeln. Diesen kann er dann mit seinem Smartphone 6 fotografieren und über eine App 5 an einen Serviceanbieter des Gerätes 1 senden, der beispielsweise mittels einer Datenbank den zugehörigen "Klartext" (der ggf. auch grafische Elemente enthalten kann) ermittelt und an den Bediener zurücksendet. Auf diese Weise wird der Bediener/Anwender schnell und komfortabel beim "Dechiffrieren" der alphanumerischen Codes unterstützt.

Zusammenfassend betrifft die Erfindung ein technisches Gerät, eine App für ein Smartphone sowie ein Verfahren zum Ermitteln einer Antwort auf eine Anfrage und ein Verfahren zur Unterstützung von Bedienern eines technischen Gerätes. Um einen Bediener eines technischen Gerätes besser beim Verstehen von Meldungen in einem alphanumerischen Code zu unterstützen, wird eine Lösung vorgeschlagen, bei der dieser Code durch eine Umwandlungseinrichtung des Gerätes in einen Mustercode umgewandelt wird, den dann ein Bediener mit seinem Smartphone fotografiert und über eine App an einen Serviceanbieter des Gerätes sendet, worauf der Bediener eine Klartext-Antwort zur Erläuterung des alphanumerischen Codes erhält.

## Patentansprüche

1. Technisches Gerät (1) mit zumindest einem Bildschirm (2), mittels dem ein Mustercode (3) ausgebbar ist, und zumindest einer Umwandlungseinrichtung, mittels der eine Ausgabe des Gerätes (1) von einem alphanumerischen Code in den Mustercode (3) umwandelbar ist, wobei der Mustercode (3) zumindest die im alphanumerischen Code enthaltenen Informationen aufweist.

2. Technisches Gerät nach Anspruch 1
mit zumindest einer Eingabeeinheit (4), mittels der die Umwandlung auslösbar ist.

3. Technisches Gerät nach Anspruch 2,
wobei die Eingabeeinheit (4) in den Bildschirm (2) integriert ist.

4. Technisches Gerät nach einem der vorherigen Ansprüche, wobei der Mustercode (3) als zumindest zweidimensionaler Code ausgeführt ist.

5. App (5) für ein Smartphone (6),
**dadurch gekennzeichnet,**
**dass** ein vom Smartphone (6) aufgenommener Mustercode (3) eines technischen Gerätes (1) nach einem der vorherigen Ansprüche an einen Serviceanbieter des Gerätes (1) sendbar ist.

6. App nach Anspruch 5,
wobei der Serviceanbieter anhand des Mustercodes (3) ermittelbar ist.

7. App nach Anspruch 5 oder 6,
wobei eine Antwort des Serviceanbieters grafisch darstellbar ist.

8. Verfahren zum Ermitteln einer Antwort auf eine Anfrage, wobei
• als Anfrage ein Mustercode (3) eines technisches Gerätes (1) nach einem der Ansprüche 1-4 mittels einer Empfangseinheit empfangen wird,
• anhand des Mustercodes (3) die Art des technischen Gerätes (1) sowie der in den Mustercode (3) umgewandelte alphanumerische Code ermittelt werden,
• anhand des alphanumerischen Codes in einer Datenbank eine Erläuterung zum alphanumerischen Code ermittelt wird und
• die Erläuterung als Antwort zurückgesendet wird.

9. Verfahren zur Unterstützung von Bedienern eines technischen Gerätes (1) nach einem der Ansprüche 1-4, wobei
• von dem Gerät (1) ein alphanumerischer Code ausgegeben wird,
• der alphanumerische Code durch eine Umwandlungseinrichtung in einen Mustercode (3) umgewandelt wird,
• der Mustercode (3) vom Bediener mittels eines Smartphones (6) aufgenommen und über eine App (5) nach einem der Ansprüche 5-7 an einen Serviceanbieter des Gerätes (1) gesendet wird,
• eine Erläuterung des Serviceanbieters zum alphanumerischen Code auf dem Smartphone (6) empfangen und dargestellt wird.
